# EUROPEAN PATENT SPECIFICATION

(11) **EP 2 095 637 B1**
(45) Date of publication and mention of the grant of the patent: **19.11.2014**
(21) Application number: 08753476.4
(22) Date of filing: 14.05.2008
(51) Int. Cl.: H04B 3/54, H04H 20/63

(54) **SYSTEM FOR DISPLAYING IMAGE AND METHOD FOR CONTROLLING THE SAME**
SYSTEM ZUR BILDANZEIGE UND STEUERUNGSVERFAHREN DAFÜR
SYSTÈME D'AFFICHAGE D'IMAGE ET PROCÉDÉ DE COMMANDE DUDIT SYSTÈME

(30) Priority: 15.05.2007 KR 20070047337
(43) Date of publication of application: 02.09.2009
(73) Proprietor: LG Electronics Inc., Seoul 150-721 (KR)
(72) Inventor: PARK, Jong-Seok, Gyoungsangbuk-do 730-727 (KR)
(74) Representative: Cabinet Plasseraud
(86) International application number: PCT/KR2008/002680
(87) International publication number: WO 2008/140252

(56) References cited:
- EP-A2- 0 369 382
- KR-A- 20030 079 514
- KR-A- 20050 031 712
- KR-A- 20050 040 985
- KR-B1- 100 682 320
- US-A- 5 625 863
- US-A1- 2004 250 273
- US-A1- 2005 015 805
- US-A1- 2005 076 373

## Description

### Technical Field

The present disclosure relates to an image display system, and more particularly, to allowing a plurality of sub image processors to receive a desired image from one hostimage processor through power line communication, and to display the image. Also, the present disclosure relates to an apparatus and a method that can check other sub devices connected to a host image processor even through a sub image processor and control the host image processor to operate another sub device.

### Background Art

Recently, at least one television (TV) is installed in a household or an educational organization in general to allow a plurality of users to view various programs at different spaces or to view the same program simultaneously.

Generally, a home network method through RS-232C standard of a power line carrier is in progress in a digital TV. The home network method uses a power line already existing in a household to save additional costs required for a line installation and simplify an installation process. Establishment of a home network system is increasing with these advantages.

Therefore, existing technology using a power line is intended for realizing a home network system. Generally, a home appliance applied to a home network includes a serial communication function allowing communication with other devices. Networking can be realized using this function.

US2005/015805 A1 discloses a complex system/method for controlling streaming video and/or audio distributed over a PLC network between media server and media devices controlled by media server.

A typical home network system will be described below with reference to the accompanying drawings.

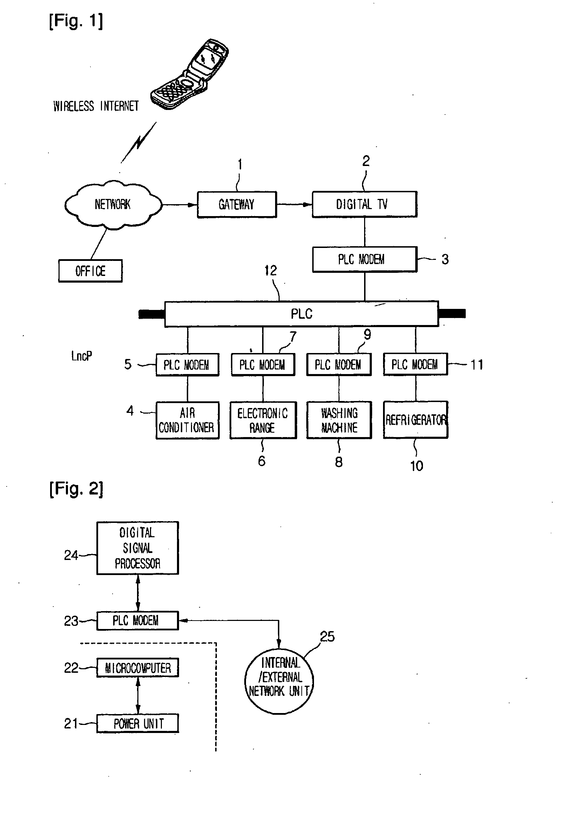

Fig. 1 is a block diagram of a typical home network system, and Fig. 2 is a view illustrating in detail the TV of Fig. 1.

Referring to Fig. 1, a typical home network system includes a TV 2 for home network management, a power line communication (PLC) carrier 3 connected to the TV 2, a PLC 12 connected to the PLC carrier 3, and PLC carriers 5,7,9, and 11 connected to a plurality of home appliances 4, 6,8, and 10, respectively, and connected to the PLC 12. Here, the TV 2 is responsible for a bridge with an external protocol through a gateway 1, and performs a network control.

Also, the plurality of home appliances 4,6, 8, and 10 can be an air conditioner, a washing machine, and an electronic rang. Like the TV 2 for home network management, the plurality of home appliances 4,6, 8, and 10 can be connected to a plurality of TVs.

Here, referring to Fig. 2, the TV 2 illustrated in Fig. 1 includes a power unit 21 supplying standby power, a microcomputer 22 receiving power from the power unit 21 to control the operation of the TV and the entire network, a digital signal processor 24 receiving an image signal input through an antenna to process the image signal such that the image signal is displayable on a screen, and a PLC carrier 23 for communication between the digital signal processor 24 and the internal/external network 25.

In the typical home network system having the above construction, power is always supplied from the power unit 21 to the microcomputer 22. The microcomputer 22 controls the operation of the digital signal processor 24 according to an IR signal, which is an external input, or a command directly input from a panel, and operates in cooperation with the internal/external network 25 through the PLC carrier 23.

### Disclosure of Invention

### Technical Problem

In a related art home network system or an image display device, to connect at least one TV, each TV includes a tuner therein. There has been an inconvenience of having to individually tune broadcasting through each tuner connected to each TV even when users desire to view the same broadcasting.

Also, as devices such as a tuner that can realize all functions of the TV are built in a TV, a user has to purchase an unreasonably expensive TV. Since cable lines should be connected to each TV to receive various broadcasting signals, the system is not cost-effective.

### Technical Solution

The present disclosure relates to a system as defined in claim 1 and a method as defined in claim 4. It allows an image transmitted from a main TV to be realized simply using a power line connection in a system to which at least one TV is connected.

Also, the present disclosure enables a user of a sub device to check electronic program guide (EPG) information stored in a main device by allowing information stored in the main device to be transmitted to the sub device.

Also, the present disclosure allows a broadcasting program selected through a tuner of a main device to be transmitted to a sub device, so that the sub device does not need to necessarily include a tuner to view the broadcasting program.

In one embodiment, an image display system includes: a host image processor processing a broadcasting signal received through a tuner, or an image signal received from an external image data generator so that the signal is displayable, and transmitting the same; a sub image processor displaying an image signal transmitted from the host image processor; and a power line communication (PLC) carrier for transmission/ reception of a signal between the host image processor and the sub image processor, a broadcasting signal received through a tuner of the host image processor being displayed by the sub image processor through the PLC carrier.

The details of one or more embodiments are set forth in the accompanying drawings and the description below. Other features will be apparent from the description and drawings, and from the claims.

### Advantageous Effects

An image display device and a controlling method thereof according to the present disclosure provide the following effects.

First, an image signal received through an antenna can be displayed even without the tuner by receiving a corresponding image from the host image processor including a PLC interface therein.

Second, since only a basic function of reproducing an image signal is required by allowing audio/video data received from only the host image processor to be reproduced without the tuner, a multi-system can be realized at low costs.

Third, an image can be realized using the sub image processor even without a separate manipulation by a user by monitoring the state of the sub image processor through PLC between the host image processor and the sub image processor.

Fourth, since the sub image processor can actively request data transmission, an image reproduced by the host device can be conveniently viewed if necessary by the sub device.

Fifth, since an image signal realized using an external device by the host image processor as well as an image received through the antenna can be also transmitted, various images can be realized.

Sixth, since the operation of an external image data generator installed at a long distance can be controlled according to a command input by an external image processor, a desired image can be viewed without a limitation in a place.

### Brief Description of the Drawings

Fig. 1 is a block diagram of a general home network system.
Fig. 2 is a schematic block diagram illustrating the construction of the TV of Fig. 1.
Figs. 3 and 4 are block diagrams illustrating a schematic concept of an image display device according to the present disclosure.
Figs. 5 and 6 are block diagrams illustrating an embodiment of the image display device of Fig. 3.
Figs. 7 and 8 are block diagrams illustrating the network construction of an image display device according to the present disclosure.
Fig. 9 is a block diagram illustrating another embodiment of an image display device according to the present disclosure.
Fig. 10 is a view illustrating a menu screen for controlling a sub image processor and an external image data generator in the host image processor of Fig. 9.

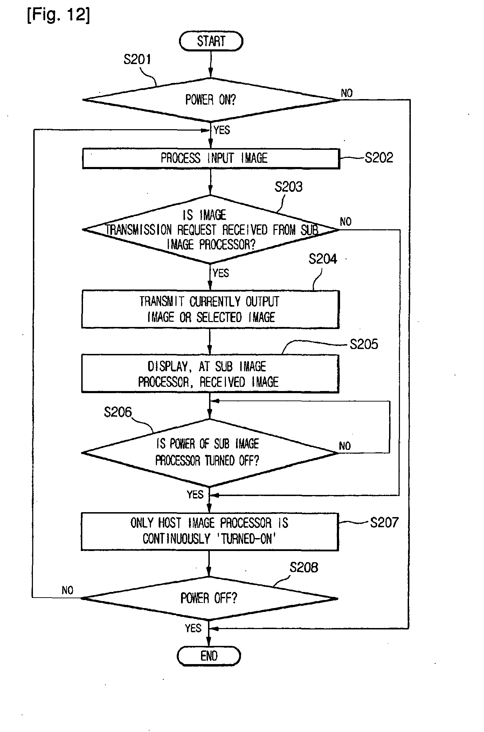

Figs. 11 to 15 are flowcharts illustrating a controlling method of an image display device according to the present disclosure.

### Mode for the Invention

Reference will now be made in detail to the embodiments of the present disclosure, examples of which are illustrated in the accompanying drawings.

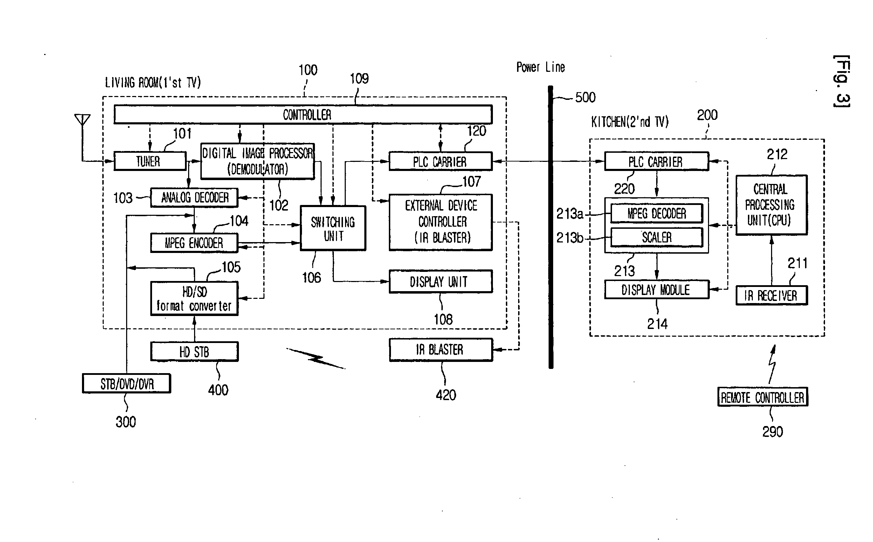

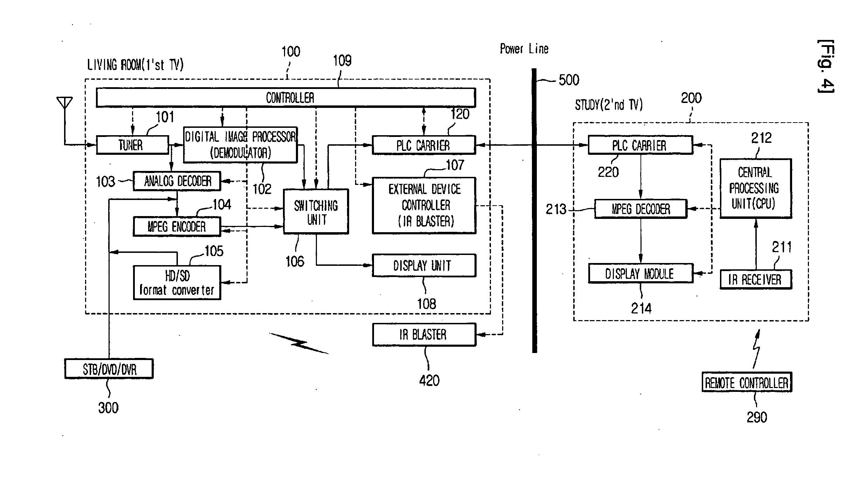

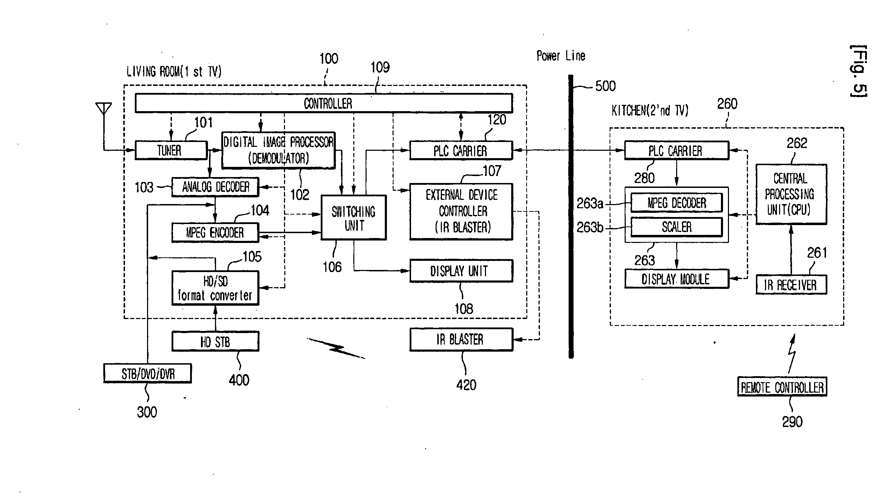

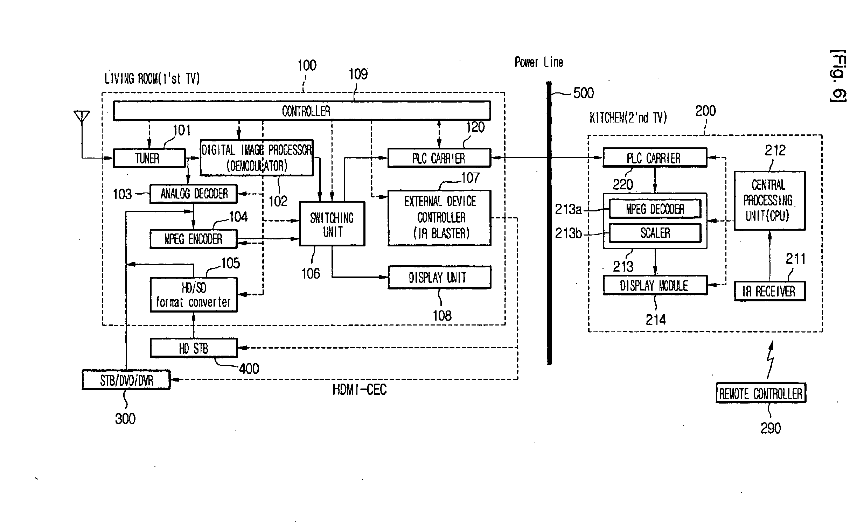

Figs. 3 and 4 are block diagrams illustrating a schematic concept of an image display device according to the present disclosure, and Figs. 5 and 6 are block diagrams illustrating an extended concept of the image display system of Fig. 3.

Referring to Fig. 3, the image display system includes a host image processor 100 processing a broadcasting signal received through an antenna or an image signal received from an external image data generator such that the signal is displayable and transmitting the signal to a sub device, a sub image processor 200 displaying an image signal transmitted from the host image processor 100.

Also, the image display system includes PLC carriers 120 and 220 for transmission/ reception of a signal between the host image processor 100 and the sub image processor 200, and a power line 500 transmitting a signal transmitted/received through the PLC carriers 120 and 220.

Here, the host image processor 100 includes a tuner 101 for selecting a channel in response to a command input from a user, a demodulator 102 for processing a digital broadcasting signal received through the tuner 101, an analog decoder 103 for decoding an analog image signal received through the tuner 101, a moving picture experts group(MPEG) encoder 104 for encoding an image signal decoded by the analog decoder 103, a switching unit 106 for selectively outputting an image signal processed by the MPEG encoder 104, a display unit 108 for displaying an image selected by the switching unit 106, and a controller 109 outputting a control signal to the PLC carrier 120 so that a relevant image signal can be transmitted to the sub image processor 200 in response to a command input by the user or a command received from the sub image processor 200.

The sub image processor 200 includes the PLC carrier 220 for transmitting/receiving a signal to/from the PLC carrier 120 of the host image processor 100, an IR receiver 211 for receiving a command input through a remote controller 290 by a user, a central processing unit (CPU) 212 outputting a control signal in response to a command input through the IR receiver 211, and an MPEG decoder 213 processing an image signal such that the image signal received through the PLC carrier 220 can be displayable on a display module 214 in response to a control signal of the CPU 212.

Also, referring to Fig. 3, in the image display device according to the present disclosure, various external devices such as a set top box (STB), a digital versatile disc (DVD), a digital video recorder (DVR), and a high definition (HD) STB can be connected to the host image processor 100.

Here, the sub image processor 200 can select a specific device from a plurality of external devices connected to the host device 100, and further, can request the host device 100 to retransmit an image signal delivered from the connected specific device to the sub device 200.

Also, the image processor further includes a format converter 105 as a device receiving external image data. The format converter 105 formats an image signal input through an HD STB 400 in a specific format.

An image signal format-converted by the format converter 105 can be displayed by the host device 100 or the sub device 200.

An image signal format-converted by the format converter 105 is input to the switching unit 106 via the MPEG encoder 104.

Also, referring to Fig. 4, in the image display device according to the present disclosure, same reference numerals are used for the same elements as those illustrated in Fig. 3.

That is, the image display device includes a host image processor 100 processing a broadcasting signal received through an antenna or an image signal received from an external image data generator such that the signal is displayable and then transmitting the signal, a sub image processor 200 connected to the host image processor 100 as illustrated in Fig. 4.

Also, the sub image processor 200 displays an image signal transmitted by the host image processor 100. The image display device includes PLC carriers 120 and 220 for transmitting/receiving a signal between the host image processor 100 and the sub image processor 200, a power line 500 transmitting a signal transmitted/received through the PLC carriers 120 and 220, and an IR blaster 420 for transmitting a control signal of the host image processor 100 to an external device 310.

Here, the host image processor 100 includes a tuner 101 for selecting a channel, a demodulator 102 for processing a digital broadcasting signal received through the tuner 101, an analog decoder 103 for decoding an analog image signal received through the tuner 101, an MPEG encoder 104 for encoding an image signal decoded by the analog decoder 103 in an MPEG format, a switching unit 106 for selectively outputting an image signal processed by the demodulator 102/the MPEG encoder 103, and a display unit 108 for displaying an image selected by the switching unit 106.

Also, the host image processor 100 includes a controller 109 outputting a control signal to the PLC carrier 120 so that a relevant image signal can be transmitted to the sub image processor 200 in response to a command input by the user or a command received from the sub image processor 200.

Meanwhile, the sub image processor 200 includes the PLC carrier 220 for transmitting/receiving a signal to/from the PLC carrier 120 of the host image processor 100, an IR receiver 211 for receiving a command input through a remote controller 290 by a user, a central processing unit (CPU) 212 outputting a control signal in response to a command input through the IR receiver 211, and an MPEG decoder 213 processing an image signal such that the image signal received through the PLC carrier 220 can be displayable on a display module 214 in response to a control signal of the CPU 212.

Therefore, unlike the case of Fig. 3, the image display device can control the external device 310 through the IR blaster 420 in case of receiving an image signal through the external device 310 such as a DVD. A signal transmitted/received through the IR blaster 420 is one of a control signal transmitted from the host image processor itself 100 or a control signal transmitted from the sub image processor 200.

Here, the sub image processor 200 receives a user's request command from the remote controller 290 through the IR receiver 211 to transmit the user's command to the CPU 212. The CPU 212 controls the command received through the IR receiver 211 to be transmitted to the PLC carrier 120 of the host image processor 100 through the PLC carrier 220.

Then, the PLC carrier 120 of the host image processor 100 delivers the transmitted command to the controller 109. The controller 109 allows corresponding contents/data to be transmitted to the sub image processor 200 in response to an input command.

Particularly, the controller 109 of the host device 100 transmits a control signal to an external device controller 107 to control the external device 310. That is, the external device controller 107 transmits a control signal to the external device 310 through the IR blaster 420.

An operation and a method of the image display device having the above construction according to the present disclosure will be described below.

When a user inputs a power-on command to the host image processor 100, the controller 109 outputs a control signal to the tuner 101 so that a channel desired by the user can be selected, or outputs a control signal to the switching unit 106 so that one of external signals input through the external image data generators 300 and 400 is selectively output.

Then, an image signal selected by the switching unit 106 is displayed on the display unit 108. The controller 109 allows an image signal desired by the user to the sub image processor 200 via a power line 500 through the PLC carrier 120 depending on whether there is an image signal request from the sub image processor 200.

That is, since the sub image processor 200 does not include a tuner, the sub image processor 200 can realize only a function of receiving an image signal realized by the host image processor 100 and displaying the image signal.

Here, the sub image processor 200 can be a device having a display module like a general display device (e.g., a TV and a monitor), or a projector having a projector optical unit 264 and performing a scanning operation through a separate screen as illustrated in Fig. 5.

Also, referring to Figs. 3 to 6, the image display device according to the present disclosure includes the external device controllers 107 and 117 that can control the external image data generators 300 and 400. The external device controllers 107 and 117 can have different construction depending on the kinds of the external image data generators 300 and 400.

That is, the external device controller 107 can be the IR blaster as illustrated in Fig. 3, so that the sub image processor 200 can control the external image data generators 300 and 400.

In detail, when a command related to external image data is input through the sub image processor 200, a control signal is output through the external device controller 107 of the host image processor 100, and a corresponding command is transmitted to the external image data generators 300 and 400 through the IR blaster 420 in response to the output control signal.

Also, referring to Figs. 5 and 6, in the case where the external image data generators 300 and 400 are connected to the host image processor 100 through a high definition multimedia interface (HDMI), a signal of the sub device 200 can be transmitted to the external image data generators 300 and 400 through the host image processor 100 and HDMI control electronics control (CEC).

Also, when a command for controlling the external image data generators 300 and 400 is input through the sub image processor 200, the external device controller 107 transmits the command to the external image data generators 300 and 400 through the control signal transceiver 420, or directly transmits the command through the HDMI.

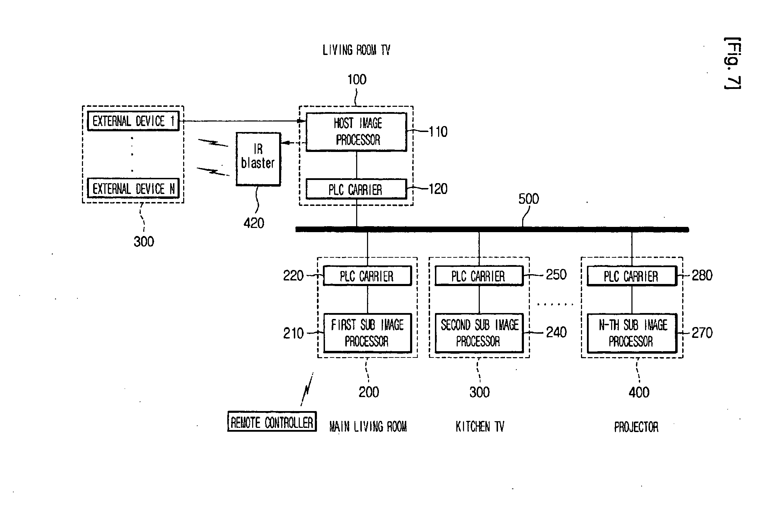

In the image display device according to the present disclosure, at least one sub image processor to N sub image processors 200, 230, and 260 can be connected to the host image processor 100 as illustrated in Fig. 7 because no special connector is required and any sub image processor having a PLC carrier can receive an image from the host image processor 100 through only power connection.

Therefore, referring to Fig. 7, in a multi system of the image processor according to the present disclosure, not only a plurality of sub image processors 200, 230, and 260 can be connected to the host image processor 100, but also various external image data generators 300 can be connected to provide various images through the sub image processor 200. Also, it is possible to control the external image data generators 300 through the sub image processor 200.

At this point, all of the host image processor 100 or the sub image processors 200, 230, and 260 can control the external image data generators 300.

That is, a command received to the host image processor 100 or the sub image processors 200, 230, and 260 is transmitted to the external image data generator 300 through the IR blaster 420.

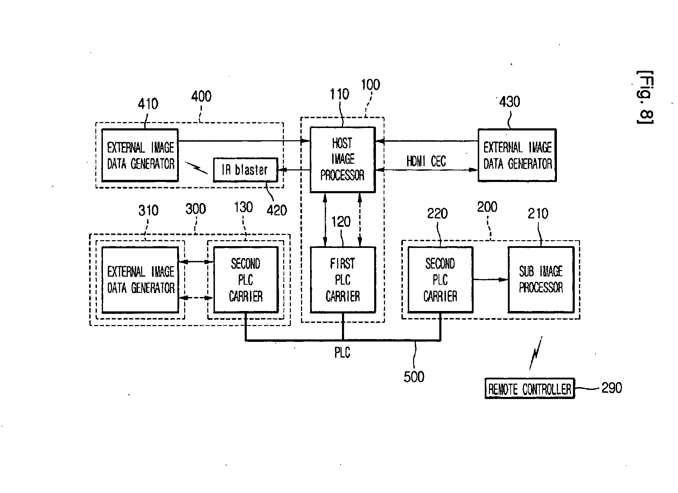

The concept of the image display system according to the present disclosure is summarized with reference to Fig. 8. The image display system includes the external image data generators 300 and 400 for providing various image signals, the host image processor 100 for processing a broadcasting signal received through the antenna or an image signal received from the external image data generators 300 and 400 so that the signal is displayable and then transmitting the processed signal, and the sub image processor 200 for displaying an image signal transmitted from the host image processor 100 or receiving an image input through the external image data generator to display the image according to a user's request.

Also, the image display system also includes the PLC carriers 120, 220, and 320 for transmitting/receiving a signal between the host image processor 100 and the sub image processor 200, and the control signal transceiver 420 for transmitting a control signal output from the host image processor 100 to the external image data generators 300.

Here, since the external image data generator 400 is connected with the host image processor 100 through the HDMI, a device for transmitting/receiving a control signal does not need to be provided separately.

The control signal transceiver 420 can be an IR blaster. The IR blaster provides a control function of audio/video (AV) devices using an IR controller and a net AV function, and can control a simple operation of the external AV device such as a video cassette recorder (VCR) and a DVD player through a network.

Therefore, when the sub image processor 200 inputs a desired command with reference to information provided from the host image processor 100 in order to control the external image data generator 300, the host image processor 100 generates a corresponding control signal and transmits the control signal to the external image data generator 300 through the control signal transceiver 420.

By doing so, the sub image processor 200 can control the external image data generator 300.

The image display system having the above-described construction judges the power state of the sub image processor and transmits a desired image as follows.

The host image processor 100 periodically monitors the power state of the sub image processor 200. When it is judged that power is applied, the host image processor 100 transmits a relevant image signal to the sub image processor 200 through the power line.

That is, the host image processor 100 transmits an encoded image signal to the relevant sub image processor 200 through the PLC carrier 120. The sub image processor 200 receives an image output from the host image processor 100 through communication with the host image processor 100 through only power application, decodes the image so that the image is displayable at the relevant sub image processor 200, and displays the image.

Therefore, since the sub image processor 200 does not include a tuner inside its set, the sub image processor 200 only receives image and voice signals from the host image processor 100, and outputs the signals.

When the sub image processor 200 requests the host image processor 100 to transmit an image signal, the host image processor 100 transmits the requested image to the sub image processor 200.

Then, the sub image processor 200 transmits a command desired by the user to the host image processor 100 through the PLC carrier 200 mounted in advance, and the host image processor 100 transmits the command to the controller 109. The controller 109 controls the relevant image to be transmitted to the sub image processor 200 according to the command.

Therefore, when the power of the sub image processor 210 is turned-on, a controller transmits information that the power is turned-on to the PLC carrier 120 of the host image processor 100 through the PLC carrier 220. A controller 111 of a main image processor 110 of the host image processor 100 receives this information and transmits an image signal currently received through an antenna or received through the external image data generator 300 to the sub image processor 210.

Then, the sub image processor 200 receives an image transmitted from the host image processor 100 to display the image on a display unit 213.

That is, the sub image processor 200 does not receive and display a broadcasting signal by itself but receives an image signal from a separate image processor through a power line and only displays the received image signal.

As described above, at least one sub image processor 200 can be connected to the host image processor 100. The connected sub image processor 200 displays an image signal transmitted from the host image processor 100.

Meanwhile, in the case where the sub image processor 200 intends to control an external image data generator connected through power line communication, the PLC carrier 130 is selectively mounted on the host image processor 100 depending on the position of the external image data generator.

For example, in the case where the external image data generator is installed in a place distant from a place where the host image processor 100 has been installed, the PLC carrier 130 can be moved to the place where the external image data generator is installed in order to control the external image data generator through the sub image processor 200.

When the external image data generator has only to be connected to the power line, a command or a control signal transmitted through a PLC carrier 220 of the sub image processor 200 is directly transmitted to the PLC carrier 130, so that the sub image processor 200 can control the external image data generator.

Also, as illustrated in Fig. 7, data received in various forms such as ground waves, a cable, a satellite, a DVD, and an external DVR are format-converted by a format converter 117 depending on the format of an output unit through which a user intends to output data, and then the data are transmitted to a relevant sub image processor through the PLC carrier 120.

Also, in the case where the host image processor in the image display system is a TV having a storing function, connection relation between the external image data generator and the sub image processor, and an operation thereof are described below.

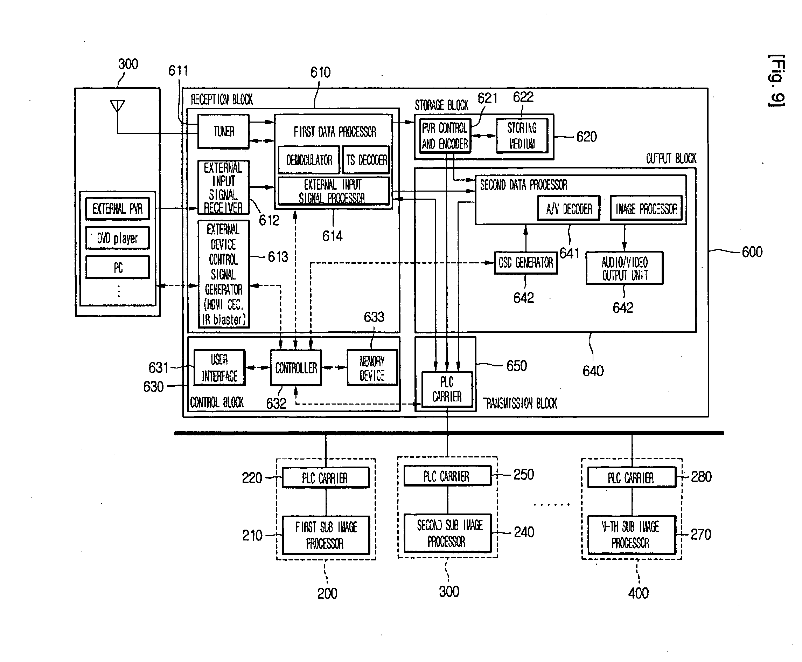

Referring to Fig. 9, the image display system according to the present disclosure includes a host image processor 600 processing a broadcasting signal received through an antenna or an image signal received from an external image data generator so that the signal is displayable and then transmitting the processed signal, and storing a desired image, sub image processors 200, 230, and 260 for displaying an image signal transmitted from the host image processor 600, an external image data generator 300 transmitting various external signals, and a power line 500 for transmission/reception of signals between the host image processor and the sub image processor.

Referring to Fig. 9, the host image processor 600 includes a reception block 610 for receiving image signals received through an antenna (not shown) or the external image data generator 300, the storage block 620 for selectively storing an image received through the reception block 610, a control block 630 for controlling a relevant command to be performed according to a command input by a user, an output block 640 for processing image/voice to output the image/voice of the reception block 610 or the storage block 620, and a PLC carrier 650 for transmitting an image signal processed by the output block 640 to the sub image processors 200, 230, and 260, and receiving a command transmitted from the power line 500.

Here, the reception block 610 can include a tuner 611 for selecting an image received through the antenna, an external input signal receiver 612 for receiving an image received through the external image data generator 300, a first data processor 614 for processing an image signal received through the tuner 611 or the external input signal receiver 612, an external device control signal generator 613 for controlling the external device 300 using a control signal from the control block 630. The external device control signal generator 613 can be an HDMI or an IR blaster.

Also, the control block 630 includes a user interface 631 for receiving a command desired by a user, a controller 632 for outputting a control signal according to a command input through the user interface 631 or a command input through the PLC carrier 650, and a memory device 633 for storing various menus and commands for control.

Also, the output block 640 includes a second data processor 641, an on-screen display (OSD) generator 642, and an audio/video output unit 642.

Here, the second data processor 641 processes a signal processed by the first data processor 614 or image and voice signals already stored in the storage block 620 so that the signals can be output.

The OSD generator 642 displays the connection state of the sub image processor 200 or the external image data generator 300 to the user according to information input from the PLC carrier 650, and generates a menu screen so that the user can refer to the menu to select a desired command.

Also, the audio/video output unit 642 outputs an image and a voice processed by the second data processor 641.

An operation and a method of the image display device having the above construction are described below.

When the user inputs a power-on command to the host image processor 600, the power-on command is input through the user interface 631.

Also, the power-on command is delivered to the controller 632. The controller 632 outputs a control signal to the tuner 611 to select a channel desired by the user or controls one of external signals input through the external input signal receiver 612 to be selectively output according to the user's request.

Then, the channel desired by the user is selected by the tuner 611, and an image signal selected by the tuner 611 or an image signal input through the external input signal receiver 612 is converted into data that can be processed by the first data processor 614.

At this point, the external device control signal generator 613 drives a relevant device according to a command input from the host image processor 100 or the sub image processor 200 to allow a desired image to the displayed through the host image processor 100 or the sub image processor 200.

That is, the signal is output through the first data processor 614 or the second data processor 641 depending on whether the signal received through the tuner 611 or the external input signal receiver 612 is an analog image signal or a digital image signal.

Also, the controller 632 allows a relevant command to be transmitted through the external device control signal generator 613 so that driving of the external image data generator 300 can be controlled according to the command transmitted from the sub image processors 200, 230, and 260.

The external image data generator 300 can be a device such as an external personal video recorder (PVR) 310, a DVD player 320, a personal computer (PC) 330, an STB (not shown), and a camera (not shown). Also, an image signal can be received from the external image data generator 300 through the external input signal receiver 612 and displayed. A desired image is encoded by an encoder 612 forming the storage block 620 and then stored in a storing medium 622 to selectively store a desired image according to a user's request.

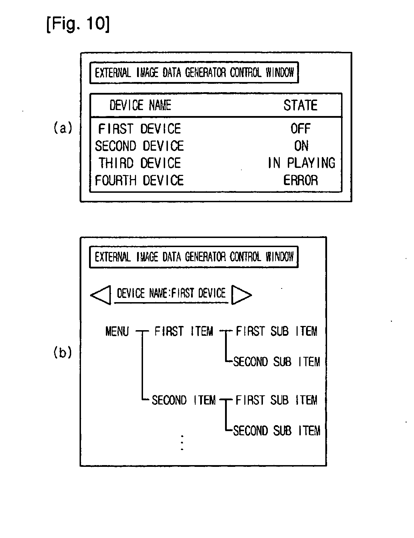

Therefore, in the case where the host image processor 600 displays a desired image through the sub image processor 200, a menu screen generated by the OSD generator 642 is displayed, and the user can select a control command with reference to the power states of devices that can communicate with the host image processor 600 or the operation states of the external image data generators 300 through the menu screen as illustrated in Fig. 10A.

Also, when one of the devices illustrated in Fig. 10A is selected, a menu screen for controlling the selected device is displayed as illustrated in Fig. 10B. That is, when each main item is selected, sub items corresponding to the main item are displayed, so that the external image data generator installed in the outside separately from the host image processor 600 can be controlled.

Meanwhile, to transmit image/voice signals processed by the host image processor 600 to the sub image processor 200, the power state of the sub image processor 200 is detected through the PLC carrier 650, and then image data desired by a user can be received and displayed from the host image processor 600 through the sub image processor 200 without a separate tuning operation.

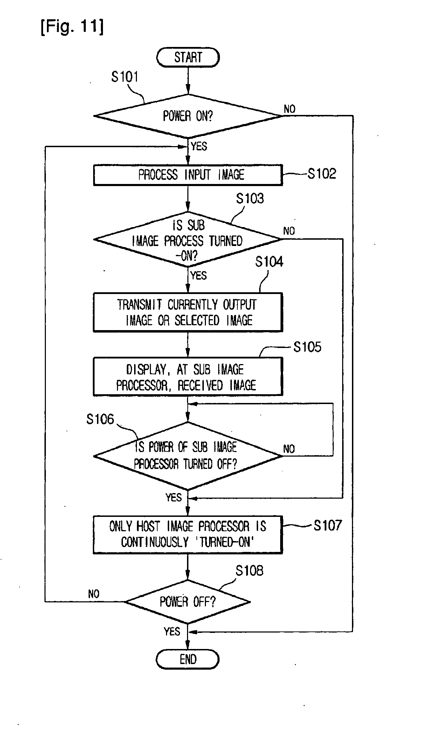

A method for displaying an image according to the present disclosure is described with reference to Fig. 11. When a power-on command is input to the host image processor, the host image processor processes an input image signal so that the signal can be output (S101-S102).

Subsequently, when the sub image processor is in a power-on state, the image currently being output by the host image processor or an image selected by the user is transmitted to the relevant sub image processor (S103-S104).

At this point, an image signal is transmitted through the PLC carrier using a power line.

Then, the sub image processor displays a received image (S105).

Also, when the power of the sub image processor is turned off by the user, only the host image processor maintains an on-state continuously to judge whether the sub image processor is turned on through power line communication with the sub image processor (S106-S107).

Last, when the user inputs a power-off command to the host image processor, an operation is ended (S108).

A method for displaying an image according to another embodiment is described below with reference to Fig. 11.

When the power of the host image processor is turned-on by the user, the host image processor processes an input image (S201-S202).

Also, whether an image transmission request command is delivered from the sub image processor is judged (S203).

When the image transmission request command is delivered from the sub image processor as a result of the judgment (S203), an image currently being output from the host image processor or an image selected by the user is transmitted to the relevant sub image processor (S203-S204). At this point, the image signal is transmitted through the PLC carrier using the power line.

Then, the sub image processor displays a received image (S205).

Also, when the power of the sub image processor is turned off by the user, only the host image processor maintains an on-state continuously to judge whether the sub image processor is turned on through power line communication with the sub image processor (S206-S207).

Last, when the user inputs a power-off command to the host image processor, an operation is ended (S208).

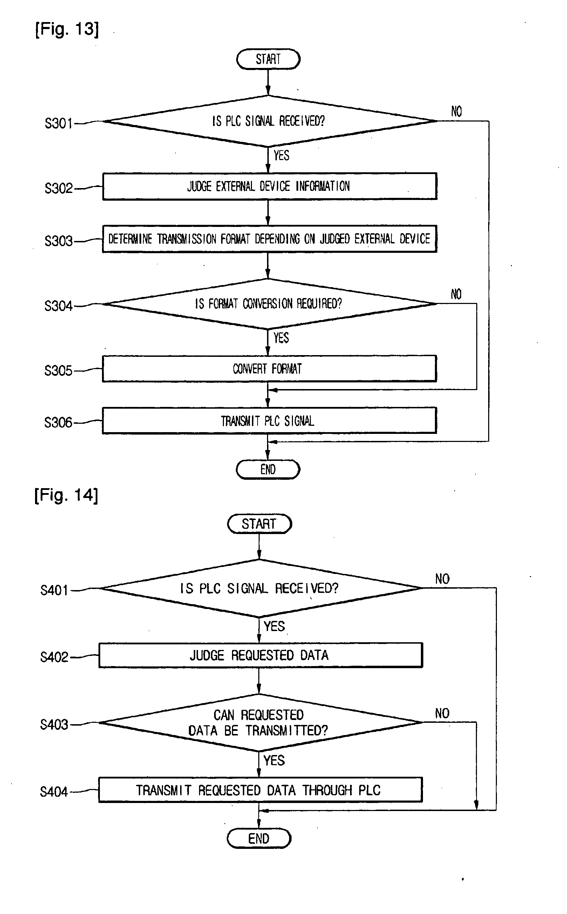

Also, in the method for controlling the image display device according to the present disclosure, transmission/reception of a signal between the host image processor and the sub image processor is described below with reference to Figs. 13 to 15.

Referring to Fig. 13, when a PLC signal is received to the host image processor, information of an external device corresponding to the PLC signal is judged (S301-S302). At this point, the judged information of the external device can be information of a sub image processor.

Therefore, a transmission format is determined according to the judged information (S303).

Also, whether format conversion is required is judged (S304).

When the format conversion is required as a result of the judgment (S304), format conversion is performed suitable for the format of a relevant sub image processor, and then a format-converted image signal is transmitted to the sub image processor through the PLC carrier (S305-S306).

Referring to Fig. 14, when a command is received through the PLC from the sub image processor, which data has been requested by the sub image processor is judged (S401-S402).

Subsequently, whether the requested data is transmittable is judged (S403).

Also, when the requested data is transmittable as a result of the judgment (S403), the requested data is immediately transmitted to the sub image processor (S404).

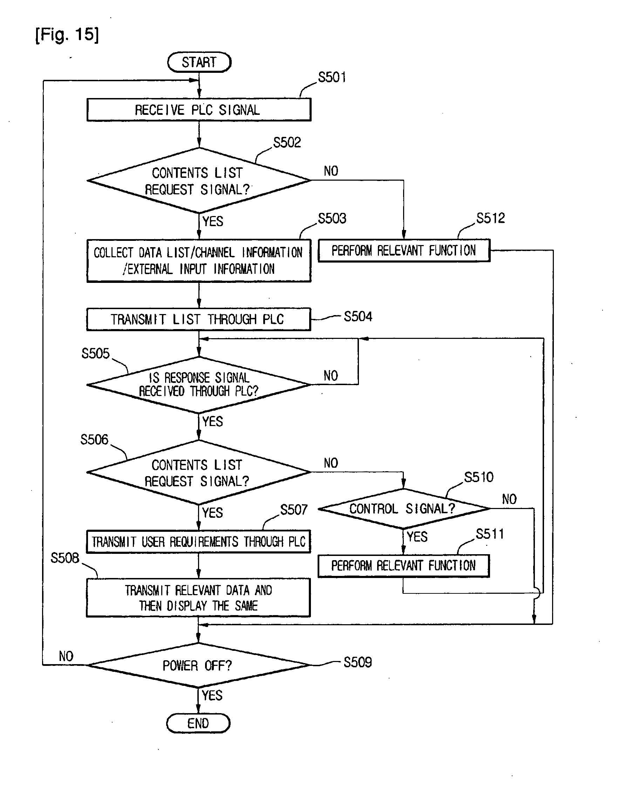

Referring to Fig. 15, when a command is received from the sub image processor through the PLC, whether the command is a data request signal is judged (S501-S502).

When the command is the data request signal as a result of the judgment (S502), a data list, channel information, and external input information input from the external image data generator are collected (S503).

Also, the list is transmitted to the sub image processor through the PLC (S504).

Subsequently, whether a response signal is received from the sub image processor through the PLC is judged (S505).

When data is a user-requested data as a result of the judgment (S505), user requirements are transmitted to the host image processor through the PLC, and relevant data desired by the user is transmitted and then displayed (S507-S508).

Also, when a power-off command is input by the user, an operation is ended (S509).

Meanwhile, when the data is not a user-requested data as a result of the judgment (S506), whether a control signal is received is judged (S510).

Subsequently, when the control signal is received as a result of the judgment (5510), a corresponding function is performed (S511).

As descried above, according to the image display system and a method thereof, an image processor having a built-in PLC carrier, capable of performing a TV function is set as a host image processor, and at least one sub image processor having only a display function so that communication can be performed only when power is applied is connected.

### Industrial Applicability

Since the present disclosure, which relates to transmitting/receiving an image between a host image processor and a sub image processor, can be applied to a digital TV, it has industrial applicability.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An image display system comprising:
a host image processor (100) processing a broadcasting signal received through a tuner (101), or processing an image signal received from an external image data generator (300,400) so that the signal is displayable, and transmitting the same;
a sub image processor (200, 230, 260) displaying an image signal transmitted from the host image processor (100); and
a power line communication carrier (120, 220, 320) for transmission/reception of a signal between the host image processor (100, 600); and the sub image processor (200, 230, 260),
the broadcasting signal received through the tuner (101) of the host image processor (100), or an image signal received from an external image data generator (300, 400) being displayed by the sub image processor (200, 230, 260) and
wherein the host image processor receives a command requesting contents list from the sub image processor through the power line communication carrier, and transmits the contents list to the sub image processor through the power line communication carrier.

2. The system according to claim 1, wherein the sub image processor (200, 230, 260) comprises:
an infrared (IR) receiver (211);
a central processing unit (212) controlling a power state of the sub image processor (200, 230, 260) and user requirements to be transmitted to the host image processor (100) according to a command input through the infrared receiver;
an image processor (213) processing an image signal transmitted from the host image processor; and
a display unit (214) displaying an image processed by the image processor.

3. The system according to claim 1, wherein the host image processor (100) is connected with at least two sub image processors (200, 230, 260).

4. A method for controlling an image display system performing power line communication between a host image processor (100) and a sub image processor (200,230,260), the method comprising:
outputting an image through the host image processor (100);
judging a power state of the sub image processor (200, 230, 260) through the power line communication;
when power of the sub image processor (200, 230, 260) is turned-on, transmitting an image output from the host image processor (100) to the sub image processor; and
outputting a transmitted image through the sub image processor (200, 230, 260),
wherein the host image processor receives a command requesting contents list from the sub image processor through the power line communication carrier, and transmits the contents list to the sub image processor through the power line communication carrier.

## Patentansprüche

1. Bildanzeigesystem, umfassend:
einen Host-Bildprozessor (100), der ein über einen Tuner (101) empfangenes Rundfunksignal verarbeitet oder ein von einem externen Bilddatenerzeuger (300, 400) empfangenes Bildsignal verarbeitet, so dass das Signal anzeigbar ist, und dieses sendet;
einen Unter-Bildprozessor (200, 230, 260), der ein vom Host-Bildprozessor (100) gesendete Bildsignal anzeigt; und
eine Trägerfrequenzanlage (120, 220, 320) zum Senden/Empfangen eines Signals zwischen dem Host-Bildprozessor (100, 600) und dem Unter-Bildprozessor (200, 230, 260),
wobei das über den Tuner (101) des Host-Bildprozessors (100) empfangene Rundfunksignal oder ein von einem externen Bilddatenerzeuger (300, 400) empfangenes Bildsignal vom Unter-Bildprozessor (200, 230, 260) angezeigt wird, und
wobei der Host-Bildprozessor über die Trägerfrequenzanlage vom Unter-Bildprozessor einen Befehl erhält, mit dem eine Inhaltsliste angefordert wird, und die Inhaltsliste über die Trägerfrequenzanlage an den Unter-Bildprozessor sendet.

2. System nach Anspruch 1, wobei der Unter-Bildprozessor (200, 230, 260) umfasst:
einen Infrarotempfänger (IR-Empfänger) (211);
eine zentrale Prozessoreinheit (212), die einen Einschaltzustand des Unter-Bildprozessors (200, 230, 260) und an den Host-Bildprozessor (100) zu sendende Nutzeranforderungen gemäß einer Befehlseingabe über den Infrarotempfänger steuert;
einen Bildprozessor (213), der ein vom Host-Bildprozessor gesendetes Bildsignal verarbeitet; und
eine Anzeigeeinheit (214), die ein vom Bildprozessor verarbeitetes Bild anzeigt.

3. System nach Anspruch 1, wobei der Host-Bildprozessor (100) mit mindestens zwei Unter-Bildprozessoren (200, 230, 260) verbunden ist.

4. Verfahren zur Steuerung eines Bildanzeigesystems, bei dem mittels Trägerfrequenzanlage eine Kommunikation zwischen einem Host-Bildprozessor (100) und einem Unter-Bildprozessor (200, 230, 260) stattfindet, wobei das Verfahren umfasst:
Ausgeben eines Bildes über den Host-Bildprozessor (100);
Bewerten eines Einschaltzustandes des Unter-Bildprozessors (200, 230, 260) über die Trägerfrequenzanlage;
Senden eines vom Host-Bildprozessor (100) ausgegebenen Bildes an den Unter-Bildprozessor, wenn der Unter-Bildprozessor (200, 230, 260) eingeschaltet ist; und
Ausgeben eines gesendeten Bildes über den Unter-Bildprozessor (200, 230, 260),
wobei der Host-Bildprozessor über die Trägerfrequenzanlage vom Unter-Bildprozessor einen Befehl erhält, mit dem eine Inhaltsliste angefordert wird, und die Inhaltsliste über die Trägerfrequenzanlage an den Unter-Bildprozessor sendet.

## Revendications

1. Système d'affichage d'images comprenant :
un processeur d'image hôte (100) traitant un signal de diffusion reçu par l'intermédiaire d'un syntoniseur (101), ou traitant un signal d'image reçu en provenance d'un générateur de données d'image externe (300, 400) de sorte que le signal puisse être affiché, et le transmettant ;
un sous-processeur d'image (200, 230, 260) affichant un signal d'image transmis à partir du processeur d'image hôte (100) ; et
une porteuse de communication de ligne électrique (120, 220, 320) pour une transmission/réception d'un signal entre le processeur d'image hôte (100, 600) et le sous-processeur d'image (200, 230, 260),
le signal de diffusion reçu par l'intermédiaire du syntoniseur (101) du processeur d'image hôte (100), ou un signal d'image reçu en provenance du générateur de données d'image externe (300, 400), étant affiché par le sous-processeur d'image (200, 230, 260), et
dans lequel le processeur d'image hôte reçoit une commande demandant une liste de contenus en provenance du sous-processeur d'image par l'intermédiaire de la porteuse de communication de ligne électrique, et transmet la liste de contenus au sous-processeur d'image par l'intermédiaire de la porteuse de communication de ligne électrique.

2. Système selon la revendication 1, dans lequel le sous-processeur d'image (200, 230, 260) comprend :
un récepteur infrarouge (IR) (211) ;
une unité centrale (212) commandant un état d'alimentation électrique du sous-processeur d'image (200, 230, 260) et des exigences d'utilisateur à transmettre au processeur d'image hôte (100) en fonction d'une commande entrée par l'intermédiaire du récepteur infrarouge ;
un processeur d'image (213) traitant un signal d'image transmis à partir du processeur d'image hôte ; et
une unité d'affichage (214) affichant une image traitée par le processeur d'image.

3. Système selon la revendication 1, dans lequel le processeur d'image hôte (100) est relié à au moins deux sous-processeurs d'image (200, 230, 260).

4. Procédé de commande d'un système d'affichage d'image effectuant une communication de ligne électrique entre un processeur d'image hôte (100) et un sous-processeur d'image (200, 230, 260), le procédé comprenant :
la délivrance d'une image par l'intermédiaire du processeur d'image hôte (100) ;
le jugement d'un état d'alimentation électrique du sous-processeur d'image (200, 230, 260) par l'intermédiaire de la communication de ligne électrique ;
lorsque le sous-processeur d'image (200, 230, 260) est sous tension, la transmission d'une image délivrée à partir du processeur d'image hôte (100) à destination du sous-processeur d'image ; et
la délivrance d'une image transmise par l'intermédiaire du sous-processeur d'image (200, 230, 260),
dans lequel le processeur d'image hôte reçoit une commande demandant une liste de contenus en provenance du sous-processeur d'image par l'intermédiaire de la porteuse de communication de ligne électrique, et transmet la liste de contenus au sous-processeur d'image par l'intermédiaire de la porteuse de communication de ligne électrique.
